# EUROPÄISCHE PATENTSCHRIFT

(11) **EP 2 743 159 B1**
(45) Veröffentlichungstag und Bekanntmachung des Hinweises auf die Patenterteilung: **15.02.2017**
(21) Anmeldenummer: 13186377.1
(22) Anmeldetag: 27.09.2013
(51) Int. Cl.: B62D 25/18, B62D 25/16

(54) **Kotflügelerweiterung**
Mudguard extension
Extension d'aile

(30) Priorität: 13.12.2012 DE 102012024344
(43) Veröffentlichungstag der Anmeldung: 18.06.2014
(73) Patentinhaber: CLAAS Tractor SAS, 78141 Velizy-Villacoublay (FR)
(72) Erfinder: Rondeau, Denis, 92360 Meudom-La-Foret (FR); Chabot, Thierry, 95490 Vauréal (FR)
(74) Vertreter: Budach, Steffen

(56) Entgegenhaltungen:
- EP-A1- 0 434 540
- WO-A1-2012/119669
- DE-U1- 8 533 778
- US-A1- 2009 302 645
- US-A1- 2010 253 034

## Beschreibung

Die vorliegende Erfindung betrifft eine Kotflügelerweiterung für einen Kotflügel eines fahrbaren landwirtschaftlichen Gerätes gemäß dem Oberbegriff von Anspruch 1 sowie ein fahrbares landwirtschaftliches Gerät mit einer solchen Kotflügelerweiterung gemäß Anspruch 15.

Der Begriff "fahrbares landwirtschaftliches Gerät" umfasst vorliegend jegliche Geräte, die mit Laufrädern ausgestattet sind und damit im weitesten Sinne fahrbar sind. Darunter fallen insbesondere Traktoren, Hoflader, insbesondere Teleskoplader, selbstfahrende Erntemaschinen o. dgl.. Darunter fallen aber auch von einem Traktor gezogene Arbeitsmaschinen oder Anhänger.

Die in Rede stehenden, fahrbaren landwirtschaftlichen Geräte sind in einem weiten Bereich konfigurierbar. Damit ist eine optimale Anpassung des Gerätes auf den jeweiligen Anwendungsfall möglich.

Ein Beispiel für die obige Konfigurierbarkeit ist die Verwendung unterschiedlicher Rädergeometrien, insbesondere Räderbreiten, bei Traktoren o. dgl.. Dies stellt eine Herausforderung für die optimale Auslegung der jeweils zugeordneten Kotflügel dar. In Abhängigkeit von den jeweiligen gesetzlichen Vorschriften ist nämlich eine unterschiedliche Überdeckung der Laufräder von Traktoren o. dgl. durch Kotflügel gefordert. Diese unterschiedlichen Anforderungen an die Kotflügel ergeben sich aber auch bereits aus dem grundsätzlich bestehenden Wunsch, eine von der Radbewegung herrührende Verschmutzung, beispielsweise durch hochgeschleuderte Erde, weitgehend zu vermeiden.

Einen Ansatz liefert die bekannte Kotflügelverbreiterung (WO 2012/119669 A1), von der die vorliegende Erfindung ausgeht. Hier ist es vorgesehen, dass eine sich bogenförmig längserstreckende Kotflügelerweiterung seitlich an den bestehenden Kotflügel eines Traktors angesetzt ist. Dadurch lässt sich bei Bedarf eine Erweiterung für den Kotflügel quer zur Fahrtrichtung des Fahrzeugs realisieren.

Problematisch bei der bekannten Kotflügelerweiterung ist die Tatsache, dass der Aufwand für die Bereitstellung einer solchen Kotflügelerweiterung aufgrund der großen Radabmessungen insbesondere bei Traktoren aufwendig und damit teuer ist. Dies betrifft zunächst die Handhabung im Rahmen der Logistik insbesondere dadurch, dass die Lagerung dieser großen und schlecht stapelbaren Teile entsprechend aufwendig ist.

Hinzu kommt, dass die Fertigung der regelmäßig im Kunststoff-Spritzgießverfahren hergestellten Kotflügelerweiterungen mit hohen Kosten verbunden ist. Auch dies geht in erster Linie auf die großen Abmessungen der Kotflügelerweiterungen zurück.

Eine andere Kotflügelerweiterung gemäss der Merkmale der Präambel von Anspruch 1 ist in der US2009/0302645 gezeigt.

Der Erfindung liegt das Problem zugrunde, die bekannte Kotflügelerweiterung derart auszugestalten und weiterzubilden, dass der Aufwand für die Bereitstellung einer solchen Kotflügelerweiterung reduziert wird.

Das obige Problem wird bei einer Kotflügelerweiterung gemäß dem Oberbegriff von Anspruch 1 durch die Merkmale des kennzeichnenden Teils von Anspruch 1 gelöst.

Wesentlich ist die grundsätzliche Überlegung, die Kotflügelerweiterung entlang ihres bogenartigen Verlaufs mindestens zweiteilig auszugestalten. Bei entsprechender Aufteilung ergeben sich dadurch separat fertigbare Erweiterungsabschnitte, die zudem leicht handhabbar und lagerbar sind.

Um den Installationsaufwand durch die Mehrteiligkeit der Kotflügelerweiterung nicht zu erhöhen, wird weiter vorgeschlagen, dass die Erweiterungsabschnitte jeweils eine Verriegelungseinrichtung aufweisen, mit denen die Erweiterungsabschnitte miteinander verriegelt werden können. Auf irgendwelche separaten Verbindungsmittel kann mit der vorschlagsgemäßen Lösung verzichtet werden.

Bei den bevorzugten Ausgestaltungen gemäß den Ansprüchen 3 und 4 lässt sich die Verriegelung der beiden Erweiterungsabschnitte miteinander dadurch vollziehen, dass die beiden Erweiterungsabschnitte jeweils als solche relativ zueinander bewegt werden. Diese Art der Verriegelung erlaubt eine ganz besonders einfache Installation, da keine zusätzlichen Verriegelungselemente wie Verriegelungshebel o. dgl. betätigt werden müssen.

Bei der besonders bevorzugten Ausgestaltung gemäß Anspruch 6 kommt es beim Verriegeln zweier Erweiterungsabschnitte zu einem Verspannen der Erweiterungsabschnitte derart, dass die beiden Erweiterungsabschnitte aufeinander zu verspannt werden. Damit lässt sich auf besonders einfache Weise sicherstellen, dass ein eventueller Spalt zwischen zwei Erweiterungsabschnitten so klein wie möglich gehalten wird.

Bei der ebenfalls bevorzugten Ausgestaltung gemäß Anspruch 9 kommen die Verriegelungseinrichtungen der beiden Erweiterungsabschnitte beim Verriegeln rastend miteinander in Eingriff, so dass ein ungewünschtes Entriegeln durch eine entsprechende Verrastung vermieden wird.

Grundsätzlich kann die vorschlagsgemäße Kotflügelerweiterung gemäß Anspruch 12 eine weitere Verriegelungseinrichtung für die Verriegelung der Kotflügelerweiterung an einem Kotflügel aufweisen. Damit lässt sich der Aufwand für die Installation der Kotflügelerweiterung weiter reduzieren.

Grundsätzlich ist es gemäß Anspruch 12 vorteilhafterweise so, dass die Verriegelung der Erweiterungsabschnitte miteinander und/oder die Verriegelung der Kotflügelerweiterung am Kotflügel werkzeuglos durchführbar ist. Dies bedeutet, dass die jeweilige Verriegelung von Hand ohne irgendwelche Zusatzmittel durchführbar sein soll.

Nach einer weiteren Lehre gemäß Anspruch 14, der ebenfalls eigenständige Bedeutung zukommt, wird das landwirtschaftliche fahrbare Gerät, das mit einer vorschlagsgemäßen Kotflügelerweiterung ausgestattet ist, als solches beansprucht. Auf alle Ausführungen zu der vorschlagsgemäßen Kotflügelerweiterung darf verwiesen werden.

Im Folgenden wird die Erfindung anhand einer lediglich ein Ausführungsbeispiel darstellenden Zeichnung näher erläutert. In der Zeichnung zeigt
- Fig. 1: ein vorschlagsgemäßes, als Traktor ausgestaltetes fahrbares Gerät mit einer vorschlagsgemäßen Kotflügelerweiterung in einer ganz schematischen Seitenansicht,
- Fig. 2: die den Hinterrädern des Traktors gemäß Fig. 1 zugeordneten Kotflügel mit montierten Kotflügelerweiterungen,
- Fig. 3: eine Kotflügelerweiterung gemäß Fig. 2 a) im demontierten Zustand und b) während der Verriegelung der beiden Erweiterungsabschnitte, jeweils in einer ausschnittsweisen, perspektivischen Darstellung und
- Fig. 4: die Kotflügelerweiterung gemäß Fig. 3b) im verriegelten Zustand in ausschnittsweisen Detaildarstellungen.

Die vorschlagsgemäße Kotflügelerweiterung 1 lässt sich für alle Arten von fahrbaren landwirtschaftlichen Geräten einsetzen. Insoweit darf auf die beispielhafte Aufzählung im einleitenden Teil der Beschreibung verwiesen werden.

Bei den im Folgenden beschriebenen Ausführungsbeispielen sind die Kotflügelerweiterungen 1 den Hinterrädern 2, insbesondere den Kotflügeln 4, eines fahrbaren landwirtschaftlichen Gerätes, hier eines Traktors 3, zugeordnet. Alle Ausführungen zu der Kotflügelerweiterung 1 sowie zu dem Traktor 3 gelten für alle anderen denkbaren Anwendungsbereiche entsprechend.

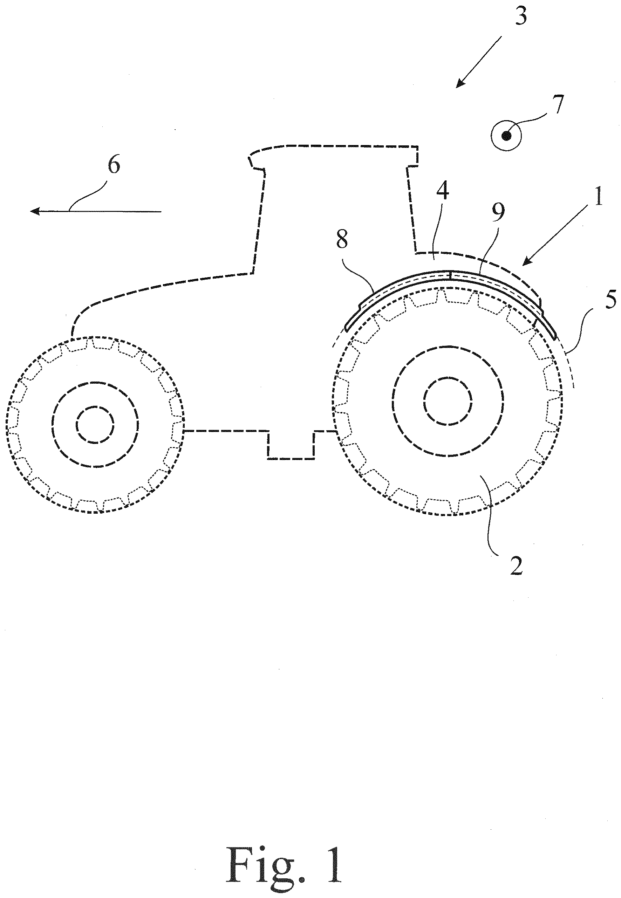

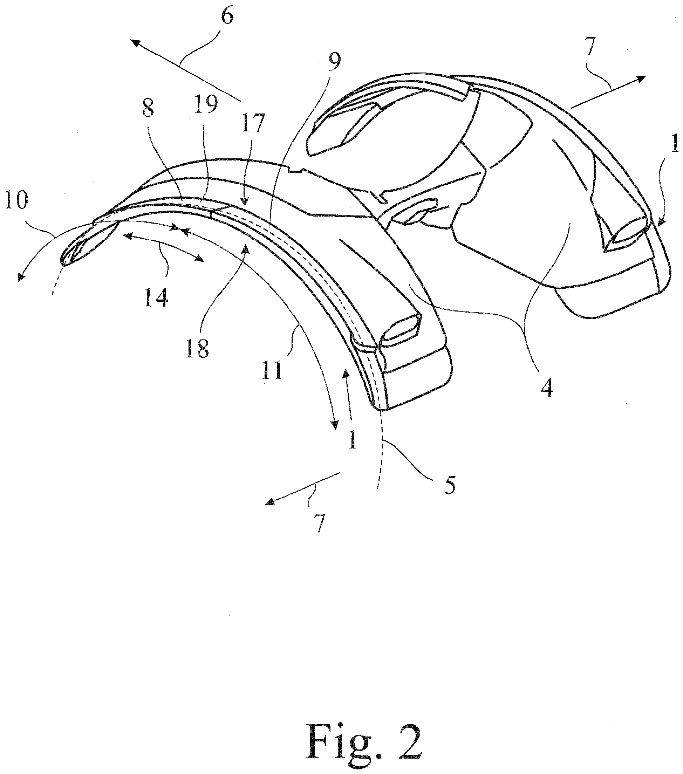

Der Traktor 3 weist auf beiden Seiten jeweils einen Kotflügel 4 mit jeweils einer zugeordneten Kotflügelerweiterung 1 auf. Im Folgenden ist allerdings im Sinne einer übersichtlichen Darstellung ausschließlich von der in den Fig. 1 und 2 dargestellten, in Fahrtrichtung linken Kotflügelerweiterung 1 die Rede. Diese Ausführungen gelten für die in Fahrtrichtung rechte Kotflügelerweiterung entsprechend.

Im montierten Zustand erstreckt sich die Kotflügelerweiterung 1 entlang einer bogenförmigen Längserstreckung 5 und stellt eine Erweiterung für den Kotflügel 4 quer zur Fahrtrichtung 6 des Traktors 3 bereit. Die Angabe "quer zur Fahrtrichtung" ist weit zu verstehen und umfasst jede Erweiterung für den Kotflügel 4 zu einer Seite des Traktors 3 hin. Die Angabe "Seite" ist im Zusammenhang so zu verstehen, dass der Traktor einen Vorderbereich, einen Hinterbereich und zwei Seitenbereiche aufweist. Zur Klarstellung ist die jeweilige Erweiterungsrichtung 7 für die in Fig. 2 dargestellten Kotflügelerweiterungen 1 mit dem Bezugszeichen "7" versehen.

Die Kotflügelerweiterung 1 weist vorschlagsgemäß mindestens einen ersten Erweiterungsabschnitt 8 und einen zweiten Erweiterungsabschnitt 9 auf, der von dem ersten Erweiterungsabschnitt 8 separat ausgebildet ist. Im montierten Zustand erstrecken sich die beiden Erweiterungsabschnitte 8, 9 jeweils über einen Teilbogen 10, 11 der Kotflügelerweiterung 1. Die beiden Erweiterungsabschnitte 8, 9 grenzen unmittelbar aneinander an, so dass sich abgesehen von einer Kontaktlinie der Eindruck einer einstückigen Kotflügelerweiterung 1 ergibt.

Je nach Anwendungsfall und je nach konstruktiven Randbedingungen können mehr als zwei Erweiterungsabschnitte 8, 9 vorgesehen sein. Bei dem dargestellten und insoweit bevorzugten Ausführungsbeispiel sind allerdings genau zwei Erweiterungsabschnitte 8, 9 realisiert.

Von besonderer Bedeutung ist für die vorschlagsgemäße Lösung, dass die Erweiterungsabschnitte 8, 9 jeweils eine Verriegelungseinrichtung 12, 13 zur Verriegelung der beiden Erweiterungsabschnitte 8, 9 miteinander aufweisen. Dabei ist es vorgesehen, dass im Zuge eines noch zu erläuternden Verriegelungsvorgangs die Verriegelungseinrichtung 12 des ersten Erweiterungsabschnitts 8 mit der Verriegelungseinrichtung 13 des zweiten Erweiterungsabschnitts 9 in verriegelnden Eingriff kommt.

Der Verteilung der Erweiterungsabschnitte 8, 9 über die bogenförmige Kotflügelerweiterung 1 kommt vorliegend besondere Bedeutung zu. In besonders bevorzugter Ausgestaltung ist es vorgesehen, dass alle den Erweiterungsabschnitten 8, 9 zugeordneten Teilbögen 10, 11 von ähnlicher Bogenlänge sind. Die Erweiterungsabschnitte 8, 9 verteilen sich also gleichmäßig über die Kotflügelerweiterung 1. Für den Fall, dass wie gezeigt nur zwei Erweiterungsabschnitte 8, 9 vorgesehen sind, ergibt sich eine Verriegelungsstelle zwischen den beiden Erweiterungsabschnitten 8, 9 in einem mittleren Bereich der Kotflügelerweiterung 1.

Grundsätzlich hat es sich als vorteilhaft herausgestellt, wenn die Bogenlängen aller Teilbögen 10, 11 jeweils um weniger als 20%, insbesondere um weniger als 10%, von dem arithmetischen Mittelwert über die Bogenlängen aller Teilbögen 10, 11 abweichen. Dies ist sowohl in fertigungstechnischer als auch in logistischer Hinsicht vorteilhaft, da die herzustellenden und handzuhabenden Komponenten in erster Näherung ähnlich dimensioniert sind.

Eine Zusammenschau der Fig. 1, 2 und 4 zeigt, dass die beiden Erweiterungsabschnitte 8, 9 im verriegelten Zustand durch die Verriegelungseinrichtungen 12, 13 kraftschlüssig und formschlüssig miteinander verriegelt sind. Denkbar ist, dass ausschließlich eine kraftschlüssige oder ausschließlich eine formschlüssige Verriegelung vorgesehen ist.

Die Verriegelung zwischen den Erweiterungsabschnitten 8, 9 kann je nach Anwendungsfall nur in einem einzigen Bewegungs-Freiheitsgrad vorgesehen sein. Beispielsweise ist es denkbar, dass die Verriegelung nur in einer Richtung entlang der bogenförmigen Längserstreckung 5 der Kotflügelerweiterung 1 vorgesehen ist. Hier und vorzugsweise ist eine Verriegelung aber zusätzlich in einer dazu senkrechten Richtung vorgesehen, wie noch erläutert wird.

Die Verriegelung der Kotflügelerweiterungen 1 miteinander kann grundsätzlich durch zusätzliche Verriegelungselemente wie Verriegelungshebel, Verriegelungsschieber o. dgl. erfolgen. Hier und vorzugsweise ist es allerdings so, dass durch eine Verriegelungsbewegung der beiden Erweiterungsabschnitte 8, 9 relativ zueinander die Verriegelung der beiden Erweiterungsabschnitte 8, 9 miteinander bewirkbar ist. Letztlich führt also eine Bewegung der Erweiterungsabschnitte 8, 9 jeweils als solcher zu der resultierenden Verriegelung.

Bei der Verriegelungsbewegung 15 kann es sich grundsätzlich um eine Linearbewegung, insbesondere um eine Schiebebewegung, handeln. Beispielsweise kann es vorgesehen sein, dass die beiden Erweiterungsabschnitte 8, 9 ineinander schiebbar sind.

Bei dem dargestellten und insoweit bevorzugten Ausführungsbeispiel ist die Verriegelungsbewegung 15 allerdings eine relative Schwenkbewegung zwischen den beiden Erweiterungsabschnitten 8, 9.

Im Einzelnen ist die Verriegelungsbewegung 15 hier eine relative Schwenkbewegung zwischen den beiden Erweiterungsabschnitten 8, 9 um eine geometrische Schwenkachse 16 senkrecht zur bogenförmigen Längserstreckung 5 der bereits verriegelten Kotflügelerweiterung 1. Der Begriff "Schwenkbewegung" ist hier weit zu verstehen. Er umfasst beispielsweise auch eine Schwenkbewegung, deren Schwenkachse sich während der Schwenkbewegung verschiebt.

Die obige als Schwenkbewegung ausgelegte Verriegelungsbewegung 15 ist insoweit besonders vorteilhaft, als bei geeigneter Auslegung für die Verriegelung beträchtliche Drehmomente aufgebracht werden können, ohne dass der Benutzer eine große Kraft aufbringen muss. Dies liegt daran, dass die Erweiterungsabschnitte 8, 9, wie hier, eine beträchtliche Länge aufweisen können, die als entsprechender Hebelarm genutzt werden kann. Die resultierenden, hohen Drehmomente können in vorteilhafter Weise genutzt werden, wenn die Erweiterungsabschnitte 8, 9 verspannt werden sollen, wie noch gezeigt wird.

Die Kotflügelerweiterung 1 weist eine Oberseite 17 und eine Unterseite 18 auf, die im montierten Zustand entsprechend nach oben bzw. nach unten gerichtet sind. Hier und vorzugsweise wird die Oberseite 17 der Kotflügelerweiterung 1 durch eine Flachseite 19 gebildet, die sich bei montierter Kotflügelerweiterung 1 einerseits entlang der bogenförmigen Längserstreckung 5 der Kotflügelerweiterung 1 und andererseits im Wesentlichen in Erweiterungsrichtung 7 erstreckt. Interessant dabei ist die Tatsache, dass die geometrische Schwenkachse 16 im Wesentlichen parallel zu der Flachseite 19 verläuft. So handelt es sich bei der Verriegelungsbewegung 15 in erster Näherung um eine Knickbewegung im Hinblick auf die Flachseite 19 der Kotflügelerweiterung 1.

Die Erweiterungsabschnitte 8, 9 haben hier und vorzugsweise jeweils einen U-förmigen Querschnitt. Die Flachseite 19 ist entsprechend mit zwei stegartigen Rändern 20 ausgestattet, die sich senkrecht von der Flachseite 19 weg erstrecken. Dies gibt den Erweiterungsabschnitten 8, 9 eine hohe mechanische Stabilität. Die Erweiterungsabschnitte 8, 9 weisen im Kontaktbereich zu dem jeweils anderen Erweiterungsabschnitt 8, 9 einen ebenfalls von der Flachseite 19 senkrecht abragenden Rand 21, 22 auf, der mit dem stirnseitigen Rand 21, 22 des jeweils anderen Erweiterungsabschnitts 8, 9 in Eingriff kommt. Hier und vorzugsweise handelt es sich bei diesem Eingriff um einen formschlüssigen Eingriff derart, dass eine seitliche Relativverschiebung der beiden Erweiterungsabschnitte 8, 9 in Erweiterungsrichtung 7 nicht möglich ist. Hierfür ist der Rand 21 des einen Erweiterungsabschnitts 8 mit einer Ausnehmung 21a und der Rand 22 des anderen Erweiterungsabschnitts 9 mit einem Steg 22a ausgestattet.

Für die Verriegelung selbst sind zahlreiche vorteilhafte konstruktive Varianten denkbar. Bei dem dargestellten und insoweit bevorzugten Ausführungsbeispiel sind die Erweiterungsabschnitte 8, 9 der Kotflügelerweiterung 1 in ihrem verriegelten Zustand ineinander verschachtelt, weiter vorzugsweise entlang der bogenförmigen Längserstreckung 5 einander überlappend, angeordnet. Hiermit ist auf einfache Weise ein Verhaken der beiden Erweiterungsabschnitte 8, 9 zur Verriegelung möglich.

Im Einzelnen ist der erste Erweiterungsabschnitt 8 mit einer laschenartigen Ausformung 23 und der zweite Erweiterungsabschnitt 9 mit einer nasenartigen Ausformung 24 ausgestattet, wobei zur Verriegelung der erste Erweiterungsabschnitt 8 mit seiner nasenartigen Ausformung 24 in die laschenartige Ausformung 23 des ersten Erweiterungsabschnitts 8 gesteckt und anschließend die Verriegelungsbewegung 15 ausgeführt wird.

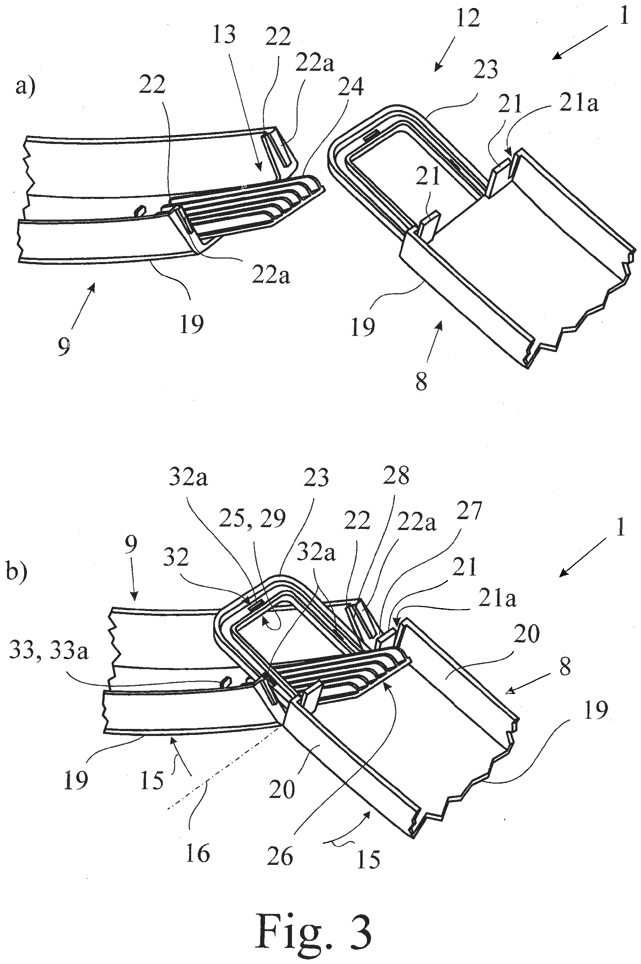

Die Verriegelung der Erweiterungsabschnitte 8, 9 der Kotflügelerweiterung 1 geht also auf eine Steck-Schwenkbewegung zurück, die bei geeigneter Auslegung robust gegen Fehlbedienungen ist. Die Steckbewegung ergibt sich aus der Zusammenschau der Fig. 3a) und 3b). Die Schwenkbewegung ergibt sich aus der Zusammenschau der Fig. 3b) und 4.

Bei dem dargestellten und insoweit bevorzugten Ausführungsbeispiel ist die Verriegelung nicht nur eine irgendwie geartete Fixierung der beiden Erweiterungsabschnitte 8, 9 miteinander. Vielmehr kommen die Verriegelungseinrichtungen 12, 13 der Erweiterungsabschnitte 8, 9 beim Verriegeln derart miteinander in Eingriff, dass sich die Erweiterungsabschnitte 8, 9 aufeinander, hier und vorzugsweise in Richtung der bogenförmigen Längserstreckung 5 an der Verriegelungsstelle, aufeinander zu verspannen. Im Einzelnen ist der erste Erweiterungsabschnitt 8 mit einer Klemmanordnung 25 und der zweite Erweiterungsabschnitt 9 mit einer Gegenklemmanordnung 26 ausgestattet, wobei bei der Verriegelung die Klemmanordnung 25 mit der Gegenklemmenordnung 26 in Eingriff kommt und die Erweiterungsabschnitte 8, 9 aufeinander zu verspannt. Bei dem dargestellten und insoweit bevorzugten Ausführungsbeispiel umfasst dies ein Verspannen der Kontaktflächen 27, 28 der beiden Erweiterungsabschnitte 8, 9 aufeinander zu, so dass ein in Fig. 2 dargestellter Kontaktspalt so klein wie möglich gehalten wird.

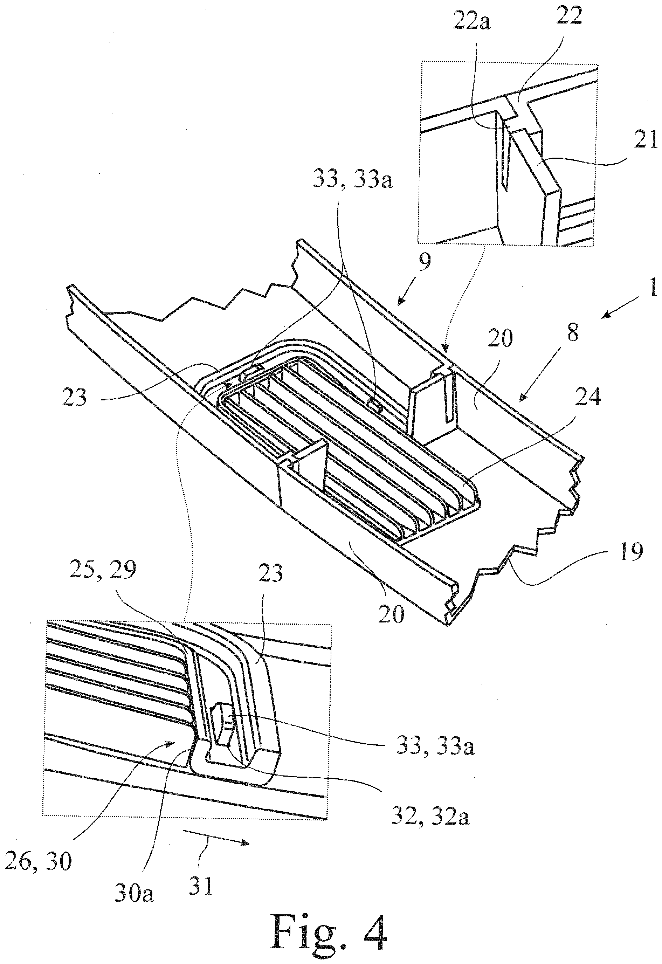

Die untere Detailansicht in Fig. 4 zeigt, dass die Klemmanordnung 25 eine Klemmkante 29 o. dgl. aufweist, die beim Verriegeln mit einer quer zur Klemmkante 29 ausgerichteten Rippenanordnung 30 der Gegenklemmanordnung 26 zusammenwirkt. Eine Zusammenschau der Fig. 3b) und 4 zeigt, dass die Verriegelungsbewegung 15 mit einem Eingriff der Stirnkanten 30a der Rippenanordnung 30 und der Klemmkante 29 einhergeht, so dass die Rippenanordnung 30 die Klemmkante 29 in Richtung der bogenförmigen Längserstreckung 5 drückt. Die Richtung dieser Kraftrichtung ist in der unteren Detaildarstellung von Fig. 4 mit dem Bezugszeichen 31 angedeutet.

Bei dem dargestellten und insoweit bevorzugten Ausführungsbeispiel ist die Rippenanordnung 30 an der nasenartigen Ausformung 24 und die Klemmkante 29 an der laschenartigen Ausformung 23 angeordnet. Dies kann auch anders herum vorgesehen sein.

Die obige Ausgestaltung der Gegenklemmanordnung 26 als Rippenanordnung 30 ist besonders vorteilhaft, da eine für die Klemmung erforderliche Elastizität und gleichzeitig eine für die Verriegelung geforderte mechanische Stabilität erzielbar ist, ohne dass zusätzliche Stabilisierungsmaßnahmen getroffen werden müssen. Um zu vermeiden, dass sich die Verriegelung bei der Montage der Kotflügelerweiterung 1 löst, ist es vorzugsweise vorgesehen, dass die Verriegelungseinrichtungen 12, 13 der Erweiterungsabschnitte 8, 9 beim Verriegeln rastend miteinander in Eingriff kommen. Hierfür ist dem ersten Erweiterungsabschnitt 8 eine Rastanordnung 32 und dem zweiten Erweiterungsabschnitt 9 eine Gegenrastanordnung 33 zugeordnet. Bei der Verriegelung kommt die Rastanordnung 32 mit der Gegenrastanordnung in Eingriff, wodurch ein anschließendes Entriegeln der Erweiterungsabschnitte 8, 9 gesperrt wird.

Im Einzelnen ist hier und vorzugsweise die Rastanordnung 32 an der laschenartigen Ausformung 23 vorgesehen, während sich die Gegenrastanordnung 33 an der Unterseite des zweiten Erweiterungsabschnitts 9 befindet. Die Rastanordnung 32 weist mehrere Ausnehmungen 32a auf, denen korrespondierende Rastnasen 33a an der Unterseite des ersten Erweiterungsabschnitts 8 zugeordnet sind.

Dadurch, dass mit der vorschlagsgemäßen Lösung die geometrischen Abmessungen aller Erweiterungsabschnitte 8, 9 relativ klein gehalten werden können, ist es mit geringem Aufwand möglich, die Erweiterungsabschnitte 8, 9 oder nur einen Teil der Erweiterungsabschnitte 8, 9 im Kunststoff-Spritzgießverfahren herzustellen. Dabei ist es weiter vorzugsweise so, dass die Erweiterungsabschnitte 8, 9 oder zumindest ein Teil der Erweiterungsabschnitte 8, 9 einstückig ausgestaltet ist bzw. sind.

Durch die insbesondere im Kunststoff-Spritzgießverfahren vorhandene Flexibilität bei der konstruktiven Auslegung kann es weiter vorzugsweise vorgesehen sein, dass die Kotflügelerweiterung 1 eine nicht dargestellte, weitere Verriegelungseinrichtung für die Verriegelung der Kotflügelerweiterung 1 an einem Kotflügel 4 aufweist. Denkbar wäre, dass auch die Montage der Kotflügelerweiterung 1 als solcher an einem Kotflügel 4 in einer rastenden Verriegelungsbewegung erfolgt.

Vorteilhafterweise ist die Verriegelung der Erweiterungsabschnitte 8, 9 miteinander und/oder die Verriegelung der Kotflügelerweiterung 1 am Kotflügel 4 jeweils werkzeuglos durchführbar. Zu dem weiten Verständnis des Begriffs "werkzeuglos" darf auf die obigen Ausführungen verwiesen werden.

Nach einer weiteren Lehre, der ebenfalls eigenständige Bedeutung zukommt, wird ein fahrbares landwirtschaftliches Gerät, insbesondere ein Traktor, eine Erntemaschine oder ein Anhänger, mit mindestens einem Kotflügel 4, an dem eine vorschlagsgemäße Kotflügelerweiterung 1 nach einem der vorhergehenden Ansprüche angeordnet ist, beansprucht. Auf alle eine Kotflügelerweiterung 1 gerichteten Ausführungen darf verwiesen werden.

## Patentansprüche

1. Kotflügelerweiterung für einen Kotflügel (4) eines fahrbaren landwirtschaftlichen Gerätes (3), wobei im montierten Zustand die Kotflügelerweiterung (1) sich bogenförmig längserstreckt und eine Erweiterung für den Kotflügel (4) quer zur Fahrtrichtung (6) des fahrbaren Gerätes (3) bereitstellt, dass die Kotflügelerweiterung (1) mindestens einen ersten Erweiterungsabschnitt (8) und einen zweiten, separat ausgebildeten Erweiterungsabschnitt (9) aufweist,
**dadurch gekennzeichnet, dass**
die Erweiterungsabschnitte (8, 9) sich jeweils über einen Teilbogen (10, 11) der Kotflügelerweiterung (1) erstrecken und jeweils eine Verriegelungseinrichtung (12, 13) zur Verriegelung der Erweiterungsabschnitte (8, 9) miteinander aufweisen, wobei die Erweiterungsabschnitte (8, 9) im verriegelten Zustand durch die Verriegelungseinrichtungen (12, 13) kraftschlüssig und/oder formschlüssig miteinander verriegelt sind, wobei eine Verriegelung entweder nur in einer Richtung entlang der bogenförmigen Längserstreckung (5) der Kotflügelerweiterung (1) oder aber zusätzlich in einer dazu senkrechten Richtung vorgesehen ist.

2. Kotflügelerweiterung nach Anspruch 1, **dadurch gekennzeichnet, dass** alle den Erweiterungsabschnitten (8, 9) zugeordneten Teilbögen (10, 11) von ähnlicher Bogenlänge sind, vorzugsweise, dass die Bogenlängen aller Teilbögen (10, 11) jeweils um weniger als 20%, vorzugsweise um weniger als 10%, von dem arithmetischen Mittelwert über die Bogenlängen aller Teilbögen (10, 11) abweichen.

3. Kotflügelerweiterung nach Anspruch 1 oder 2, **dadurch gekennzeichnet, dass** durch eine Verriegelungsbewegung (15) der Erweiterungsabschnitte (8, 9) relativ zueinander die Verriegelung der Erweiterungsabschnitte (8, 9) miteinander bewirkbar ist, vorzugsweise, dass die Verriegelungsbewegung (15) eine relative Schwenkbewegung zwischen den Erweiterungsabschnitten (8, 9) ist, weiter vorzugsweise, dass die Verriegelungsbewegung (15) eine relative Schwenkbewegung zwischen den Erweiterungsabschnitten (8, 9) um eine geometrische Schwenkachse (16) senkrecht zur bogenförmigen Erstreckung (5) der verriegelten Kotflügelerweiterung (1) ist.

4. Kotflügelerweiterung nach einem der vorhergehenden Ansprüche, **dadurch gekennzeichnet, dass** die Kotflügelerweiterung (1) eine Flachseite (19) aufweist, die sich bei montierter Kotflügelerweiterung (1) im Wesentlichen in Erweiterungsrichtung (7) erstreckt und dass die geometrische Schwenkachse (16) im Wesentlichen parallel zu der Flachseite (19) verläuft.

5. Kotflügelerweiterung nach einem der vorhergehenden Ansprüche, **dadurch gekennzeichnet, dass** die Erweiterungsabschnitte (8, 9) der Kotflügelerweiterung (1) in ihrem verriegelten Zustand ineinander verschachtelt, vorzugsweise entlang der bogenförmigen Längserstreckung (5) einander überlappend, angeordnet sind, vorzugsweise, dass der erste Erweiterungsabschnitt (8) eine laschenartige Ausformung (23) und der zweite Erweiterungsabschnitt (9) eine nasenartige Ausformung (24) aufweist und dass zur Verriegelung der zweite Erweiterungsabschnitt (9) mit seiner nasenartigen Ausformung (24) in die laschenartige Ausformung (23) des ersten Erweiterungsabschnitts (8) steckbar und anschließend die Verriegelungsbewegung ausführbar ist.

6. Kotflügelerweiterung nach einem der vorhergehenden Ansprüche, **dadurch gekennzeichnet, dass** die Verriegelungseinrichtungen (12, 13) der Erweiterungsabschnitte (8, 9) beim Verriegeln derart miteinander in Eingriff kommen, dass sich die Erweiterungsabschnitte (8, 9), vorzugsweise in Richtung der Längserstreckung (5) an der Verriegelungsstelle, aufeinander zu verspannen, vorzugsweise, dass der erste Erweiterungsabschnitt (8) eine Klemmanordnung (25) und der zweite Erweiterungsabschnitt (9) eine Gegenklemmanordnung (26) aufweist und dass bei der Verriegelung die Klemmanordnung (25) mit der Gegenklemmanordnung (26) in Eingriff kommt und die Erweiterungsabschnitte (8, 9) aufeinander zu verspannt.

7. Kotflügelerweiterung nach einem der vorhergehenden Ansprüche, **dadurch gekennzeichnet, dass** die Klemmanordnung (25) eine Klemmkante (29) aufweist, die beim Verriegeln mit einer quer zur Klemmkante (29) ausgerichteten Rippenanordnung (30) der Gegenklemmanordnung (26) zusammenwirkt.

8. Kotflügelerweiterung nach einem der vorhergehenden Ansprüche, **dadurch gekennzeichnet, dass** die Rippenanordnung (30) an der nasenartigen Ausformung (24) und die Klemmkante (29) an der laschenartigen Ausformung (23) angeordnet ist.

9. Kotflügelerweiterung nach einem der vorhergehenden Ansprüche, **dadurch gekennzeichnet, dass** die Verriegelungseinrichtungen (12, 13) der Erweiterungsabschnitte (8, 9) beim Verriegeln rastend miteinander in Eingriff kommen, vorzugsweise, dass der erste Erweiterungsabschnitt (8) eine Rastanordnung (32) und der zweite Erweiterungsabschnitt (9) eine Gegenrastanordnung (33) aufweist und dass bei der Verriegelung die Rastanordnung (32) mit der Gegenrastanordnung (33) in Eingriff kommt und ein anschließendes Entriegeln der Erweiterungsabschnitte (8, 9) sperren.

10. Kotflügelerweiterung nach einem der vorhergehenden Ansprüche, **dadurch gekennzeichnet, dass** die Rastanordnung (32) oder die Gegenrastanordnung (33) an der laschenartigen Ausformung (23) vorgesehen ist.

11. Kotflügelerweiterung nach einem der vorhergehenden Ansprüche, **dadurch gekennzeichnet, dass** der erste Erweiterungsabschnitt (8) und/oder der zweite Erweiterungsabschnitt (9) im Kunststoff-Spritzgießverfahren hergestellt ist, und/oder, dass der erste Erweiterungsabschnitt (8) und/oder der zweite Erweiterungsabschnitt (9) einstückig ausgestaltet ist bzw. sind.

12. Kotflügelerweiterung nach einem der vorhergehenden Ansprüche, **dadurch gekennzeichnet, dass** die Kotflügelerweiterung (1) eine weitere Verriegelungseinrichtung für die Verriegelung der Kotflügelerweiterung (1) an einem Kotflügel (4) aufweist.

13. Kotflügelerweiterung nach einem der vorhergehenden Ansprüche, **dadurch gekennzeichnet, dass** die Verriegelung der Erweiterungsabschnitte (8, 9) miteinander und/oder die Verriegelung der Kotflügelerweiterung (1) am Kotflügel (4) werkzeuglos durchführbar ist bzw. sind.

14. Fahrbares landwirtschaftliches Gerät, insbesondere Traktor, Erntemaschine oder Anhänger, mit mindestens einem Kotflügel (4), an dem eine Kotflügelerweiterung (1) nach einem der vorhergehenden Ansprüche angeordnet ist.

## Claims

1. A mudguard extension for a mudguard (4) of a mobile agricultural apparatus (3), wherein in the mounted condition the mudguard extension (1) extends longitudinally in an arcuate configuration and provides an extension for the mudguard (4) transversely relative to the direction of travel (6) of the mobile apparatus (3), and the mudguard extension (1) has at least a first extension portion (8) and a second separate extension portion (9),
**characterised in that**
the extension portions (8, 9) each extend over a respective arc portion (10, 11) of the mudguard extension (1) and each have a respective locking device (12, 13) for locking the extension portions (8, 9) together, wherein the extension portions (8, 9) in the locked condition are locked together in positively locking and/or force-locking relationship by the locking devices (12, 13), wherein a locking action is provided only in one direction along the arcuate longitudinal extent (5) of the mudguard extension (1) or however in addition in a direction perpendicular thereto.

2. A mudguard extension according to claim 1 **characterised in that** all arc portions (10, 11) associated with the extension portions (8, 9) are of similar arc length, and preferably that the arc lengths of all arc portions (10, 11) respectively deviate by less than 20%, preferably by less than 10%, from the arithmetic mean value over the arc lengths of all arc portions (10, 11).

3. A mudguard extension according to claim 1 or claim 2 **characterised in that** locking of the extension portions (8, 9) to each other can be implemented by a locking movement (15) of the extension portions (8, 9) relative to each other, and preferably that the locking movement (15) is a relative pivotal movement between the extension portions (8, 9) and further preferably that the locking movement (15) is a relative pivotal movement between the extension portions (8, 9) about a geometrical pivot axis (16) perpendicularly to the arcuate extent (5) of the locked mudguard extension (1).

4. A mudguard extension according to one of the preceding claims **characterised in that** the mudguard extension (1) has a flat side (19) which when the mudguard extension (1) is mounted extends substantially in the extension direction (7) and that the geometrical pivot axis (16) extends substantially parallel to the flat side (19).

5. A mudguard extension according to one of the preceding claims **characterised in that** in their locked condition the extension portions (8, 9) of the mudguard extension (1) are arranged in nested relationship one within the other, preferably in mutually overlapping relationship along the arcuate longitudinal extent (5), and preferably that the first extension portion (8) has a flap-like shaped portion (23) and the second extension portion (9) has a nose-like shaped portion (24) and that for the locking action the second extension portion (9) can be fitted with its nose-like shaped portion (24) into the flap-like shaped portion (23) of the first extension portion (8) and then the locking movement can be performed.

6. A mudguard extension according to one of the preceding claims **characterised in that** the locking devices (12, 13) of the extension portions (8, 9) come into engagement with each other upon locking in such a way that the extension portions (8, 9) are braced towards each other, preferably in the direction of the longitudinal extent (5) at the locking location, and preferably that the first extension portion (8) has a clamping arrangement (25) and the second extension portion (9) has a counterpart clamping arrangement (26) and that upon locking the clamping arrangement (25) comes into engagement with the counterpart clamping arrangement (26) and braces the extension portions (8, 9) towards each other.

7. A mudguard extension according to one of the preceding claims **characterised in that** the clamping arrangement (25) has a clamping edge (29) which upon locking cooperates with a rib arrangement (30) of the counterpart clamping arrangement (26), the rib arrangement being oriented transversely relative to the clamping edge (29).

8. A mudguard extension according to one of the preceding claims **characterised in that** the rib arrangement (30) is disposed on the nose-like shaped portion (24) and the clamping edge (29) is arranged on the flap-like shaped portion (23).

9. A mudguard extension according to one of the preceding claims **characterised in that** the locking devices (12, 13) of the extension portions (8, 9) come into latching engagement with each other upon locking, and preferably that the first extension portion (8) has a latching arrangement (32) and the second extension portion (9) has a counterpart latching arrangement (33) and that upon locking the latching arrangement (32) comes into engagement with the counterpart latching arrangement (33) and blocks subsequent unlocking of the extension portions (8, 9).

10. A mudguard extension according to one of the preceding claims **characterised in that** the latching arrangement (32) or the counterpart latching arrangement (33) is provided on the flap-like shaped portion (23).

11. A mudguard extension according to one of the preceding claims **characterised in that** the first extension portion (8) and/or the second extension portion (9) is produced using a plastic injection moulding process and/or the first extension portion (8) and/or the second extension portion (9) is or are in one piece.

12. A mudguard extension according to one of the preceding claims **characterised in that** the mudguard extension (1) has a further locking device for locking the mudguard extension (1) to a mudguard (4).

13. A mudguard extension according to one of the preceding claims **characterised in that** locking of the extension portions (8, 9) to each other and/or locking of the mudguard extension (1) to the mudguard (4) can be carried out without a tool.

14. A mobile agricultural apparatus, in particular a tractor, harvester or trailer, comprising at least one mudguard (4) on which is arranged a mudguard extension (1) according to one of the preceding claims.

## Revendications

1. Extension d'aile pour une aile (4) d'un engin agricole mobile (3), laquelle extension d'aile (1), à l'état monté, s'étend longitudinalement en forme d'arc et fournit à l'aile (4) une extension transversalement à la direction de marche (6) de l'engin mobile (3), l'extension d'aile (1) comportant au moins une première partie d'extension (8) et une deuxième partie d'extension (9) conçues séparément, **caractérisée en ce que** les parties d'extension (8, 9) s'étendent respectivement sur un arc partiel (10, 11) de l'extension d'aile (1) et comportent respectivement un dispositif de verrouillage (12, 13) pour verrouiller les parties d'extension (8, 9) entre elles, les parties d'extension (8, 9) étant, à l'état verrouillé, verrouillées entre elles par force et/ou complémentarité de forme par les dispositifs de verrouillage (12, 13), un verrouillage étant prévu soit seulement dans une direction le long de l'extension longitudinale en forme arc (5) de l'extension d'aile (1), soit, en plus, dans une direction perpendiculaire à celle-ci.

2. Extension d'aile selon la revendication 1, **caractérisée en ce que** tous les arcs partiels (10, 11) associés aux parties d'extension (8, 9) sont de longueur d'arc similaire, de préférence **en ce que** les longueurs d'arc de tous les arcs partiels (10, 11) diffèrent chaque fois de moins de 20 %, de préférence de moins de 10 %, de la moyenne arithmétique des longueurs d'arc de tous les arcs partiels (10, 11).

3. Extension d'aile selon la revendication 1 ou la revendication 2, **caractérisée en ce que** le verrouillage des parties d'extension (8, 9) entre elles peut être produit par un mouvement de verrouillage (15) des parties d'extension (8, 9) l'une par rapport à l'autre, de préférence **en ce que** le mouvement de verrouillage (15) est un mouvement de pivotement relatif entre les parties d'extension (8, 9), de manière encore plus préférentielle **en ce que** le mouvement de verrouillage (15) est un mouvement de pivotement relatif entre les parties d'extension (8, 9) autour d'un axe de pivotement géométrique (16) perpendiculaire à l'extension en forme d'arc (5) de l'extension d'aile (1) verrouillée.

4. Extension d'aile selon l'une des revendications précédentes, **caractérisée en ce que** l'extension d'aile (1) comporte un côté plat (19) qui s'étend sensiblement dans la direction d'extension (7) lorsque l'extension d'aile (1) est montée, et **en ce que** l'axe de pivotement géométrique (16) s'étend sensiblement parallèlement au côté plat (19).

5. Extension d'aile selon l'une des revendications précédentes, **caractérisée en ce que** les parties d'extension (8, 9) de l'extension d'aile (1), dans leur état verrouillé, sont imbriquées l'une dans l'autre, de préférence en se chevauchant le long de l'extension longitudinale en forme d'arc (1a), de préférence **en ce que** la première partie d'extension (8) comporte une partie saillante en forme de boucle (23) et la deuxième partie d'extension (9) une partie saillante en forme de bec (24), et **en ce que**, pour le verrouillage, la deuxième partie d'extension (9) avec sa partie saillante en forme de bec (24) peut être emboîtée dans la partie saillante en forme de boucle (23) de la première partie d'extension (8) et ensuite le mouvement de verrouillage peut être réalisé.

6. Extension d'aile selon l'une des revendications précédentes, **caractérisée en ce que** les dispositifs de verrouillage (12, 13) des parties d'extension (8, 9) viennent en prise l'un avec l'autre lors du verrouillage, de façon que les parties d'extension (8, 9) se serrent l'une contre l'autre, de préférence dans la direction de l'extension longitudinale (1a), dans la zone de verrouillage, de préférence **en ce que** la première partie d'extension (8) comporte un agencement de serrage (25) et la deuxième partie d'extension (9) un agencement de serrage complémentaire (26) et **en ce que**, lors du verrouillage, l'agencement de serrage (25) vient en prise avec l'agencement de serrage complémentaire (26) et serre les parties d' extension (8, 9) l'une contre l'autre.

7. Extension d'aile selon l'une des revendications précédentes, **caractérisée en ce que** l'agencement de serrage (25) comporte une arête de serrage (29) ou analogue qui, lors du verrouillage, coopère avec un agencement de nervures (30) de l'agencement de serrage complémentaire (26) orienté transversalement à l'arête de serrage (29).

8. Extension d'aile selon l'une des revendications précédentes, **caractérisée en ce que** l'agencement de nervures (30) est disposé sur la partie saillante en forme de bec (24) et l'arête de serrage (29) est disposée sur la partie saillante en forme de boucle (23).

9. Extension d'aile selon l'une des revendications précédentes, **caractérisée en ce que** les dispositifs de verrouillage (12, 13) des parties d'extension (8, 9) viennent en prise l'un avec l'autre par encliquetage lors du verrouillage, de préférence **en ce que** la première partie d'extension (8) comporte un agencement d'encliquetage (32) et la deuxième partie d'extension (9) comporte un agencement d'encliquetage complémentaire (33), et **en ce que**, lors du verrouillage, l'agencement d'encliquetage (32) vient en prise avec l'agencement d'encliquetage complémentaire (33) et bloque un déverrouillage ultérieur des parties d'extension (8, 9).

10. Extension d'aile selon l'une des revendications précédentes, **caractérisée en ce que** l'agencement d'encliquetage (32) ou l'agencement d'encliquetage complémentaire (33) est prévu sur la partie saillante en forme de boucle (23).

11. Extension d'aile selon l'une des revendications précédentes, **caractérisée en ce que** la première partie d'extension (8) et/ou la deuxième partie d'extension (9) est/sont réalisée(s) par un procédé de moulage par injection de matière plastique et/ou **en ce que** la première partie d'extension (8) et/ou la deuxième partie d'extension (9) est/sont conçue(s) d'une seule pièce.

12. Extension d'aile selon l'une des revendications précédentes, **caractérisée en ce que** l'extension d'aile (1) comporte un autre dispositif de verrouillage pour le verrouillage de l'extension d'aile (1) sur une aile (4).

13. Extension d'aile selon l'une des revendications précédentes, **caractérisée en ce que** le verrouillage des parties d'extension (8, 9) entre elles et/ou le verrouillage de l'extension d'aile (1) sur l'aile (4) est/sont réalisable(s) sans outil.

14. Engin agricole mobile, en particulier tracteur, machine de récolte ou remorque, comportant au moins une aile (4) sur laquelle est disposée une extension d'aile (1) selon l'une des revendications précédentes.
